# EUROPÄISCHE PATENTSCHRIFT

(11) **EP 2 115 378 B1**
(45) Veröffentlichungstag und Bekanntmachung des Hinweises auf die Patenterteilung: **20.06.2012**
(21) Anmeldenummer: 08707425.8
(22) Anmeldetag: 30.01.2008
(51) Int. Cl.: F41A 19/62, F41A 19/69

(54) **ELEKTRISCHE ABZUGSEINRICHTUNG**
ELECTRICAL TRIGGER DEVICE
DISPOSITIF DE DÉTENTE POUR ARME À FEU DE POING

(30) Priorität: 30.01.2007 DE 102007004587
(43) Veröffentlichungstag der Anmeldung: 11.11.2009
(73) Patentinhaber: Heckler & Koch GmbH, 78727 Oberndorf/Neckar (DE)
(72) Erfinder: BECKMANN, Rudi, 78733 Aichhalden (DE)
(74) Vertreter: Jacoby, Georg
(86) Internationale Anmeldenummer: PCT/EP2008/000730
(87) Internationale Veröffentlichungsnummer: WO 2008/092667

(56) Entgegenhaltungen:
- FR-A- 2 788 124
- US-A- 5 083 392
- US-A- 5 901 488

## Beschreibung

Die Erfindung betrifft eine elektrische Abzugseinrichtung für eine Handfeuerwaffe, mit
- einem gegen einen Druckpunkt verstellbaren Abzug,
- einer vorzugsweise einstellbaren, auf den Abzug einwirkenden Abzugsfeder und
- einem nach Zurücklegen des Vorlaufs betätigten elektrischen Schaltelement (Oberbegriff des Anspruchs 1).

Als ähnliche Einrichtungen sind bereits bekannt die US 7 131 336 B2, die US 5 083 392 A, die einen Startpunkt für den Anspruch 1 bildet, und die FR 2 788 124 A.

Der Abzugseinrichtung einer Handfeuerwaffe kommt besondere Bedeutung zu, besonders, was die Schußpräzision angeht. So genügt etwa bei einer Leuchtpistole ein einfaches Auslösen des Schusses mit einem Abzugswiderstand, der zwischen 25 und 50 N liegt; nach Aufbringen dieser Kraft auf den eigentlichen Abzug wird der Schuß ausgelöst, ohne Rücksicht auf Diskontinuitäten im Abzugsweg oder dessen Länge. Bei einem Militärgewehr sollte die Abzugskraft 45 N nicht übersteigen, wobei es der Schütze am Abzug genau fühlen sollte, wenn der Schuß unmittelbar bevorsteht. Bei einer Scheibenwaffe, Präzisionswaffe oder Jagdwaffe sollte der zu überwindende Abzugswiderstand 15 N (bei Faustfeuerwaffen 25 N) nicht übersteigen, wobei der Abzugswiderstand idealerweise einstellbar sein sollte.

In jedem Fall sollte der Vorlauf des Abzugs, den er zurücklegt, bis der Schuß bricht, bei Serienwaffen des gleichen Modells gleich oder zumindest einstellbar sein.

Bei den mechanischen, bisher überwiegend üblichen Abzügen ist die Kraft, die beim Abziehen zu überwinden ist, abhängig von vielen Faktoren, besonders dem mechanischen Aufbau der Abzugseinrichtung und den bei der Fertigung unvermeidlichen Toleranzen. Bei einer Selbstladewaffe muß auch die Erschütterung berücksichtigt werden, die auf einen Schuß folgt; die Abzugsrast muß absolut zuverlässig halten, auch wenn die Waffe selbst beim Einfallen der Rast noch erhebliche Bewegungen durchführt, die vom vorausgehenden Schuß verursacht wurden. Diese Bewegungen sind besonders bei modernen Waffen, die überwiegend aus Kunststoff bestehen, recht erheblich.

Bei den neuerdings aufgekommenen Waffen mit elektrischer Zündung besteht dagegen das Auslösen des Abzugs letztlich nur im Herstellen eines Kontaktes; die schwierigen mechanischen Probleme, wie etwa das Unterbrechen nach einem vorhergehenden Schuß bei einem Selbstlader, können nämlich elektrisch oder elektronisch gelöst werden, und zwar ebeno sicher wie einfach. Allerdings sollte der Kraftverlauf beim Betätigen eines mechanischen Druckpunktabzugs möglichst genau imitiert werden, damit der Schütze, der an mechanischen Waffen ausgebildet ist, letztlich nicht mehr imstande ist, beim Abziehen festzustellen, ob er etwa eine olympische Schnellfeuerpistole mit kompliziertester mechanischer Abzugseinrichtung oder eine billige Kleinkaliberpistole mit elektrischer Betätigung aus einer Flugzeug-Notausrüstiung in der Hand hat.

Es ist eine elektrisch gezündete Waffe bekannt, die mit dem Abzug auf einen piezoelektrischen Körper als Strom erzeugendes Element einwirkt. Dieses Element ist kein reines Schaltelement und ist auch keiner Feder zugeordnet. Im übrigen muss die mechanische Einwirkung auf das piezoelektrische Element erheblich sein, um den Strom für ein sicheres Zünden zu erhalten. Die Abzugseinrichtung der bekannten Waffe ist somit zur Lösung der weit4er unten stehenden Aufgabe ungeeignet und führt den Fachmann in die Irre.

Während bei nicht selbstladenden, mechanisch auszulösenden Scheibenwaffen bisher die zu überwindende Mindestkraft bei etwa 0,4 N lag (freie Pistole, sehr fein eingestellter Stecher), kann sie bei elektrisch auszulösenden Waffen ohne größeren Aufwand bis nur etwa 0,04 N betragen. In beiden Fällen reicht die Erschütterung beim Absetzen der Waffe aber aus, um den Schuß auszulösen. Dagegen sind Vorkehrungen zu treffen, die oft wegen des Mangels an Platz nur unzulänglich sind. Deshalb ist bisher der übliche elektrische Abzug in der Regel nur ein einfacher Auslöser, der einem Abzug mit Druckpunkt nur wenig ähnelt, und der auch bei einer hochwertigen Gebrauchswaffe, etwa einem Scharfschützengewehr, aus Sicherheitsgründen etwa 10 N nicht unterschreiten sollte. Hier liegt ein Problem, das den Fachmann hindert, seinen Abzug zu weich zu wählen.

Alle Schwierigkeiten treffen bei einem Sportgewehr zusammen, das beim Biathlon mitgeführt und verwendet wird, denn dort muß ein harter Druckpunkt vorliegen, der auch durch eine vor Anstrengung zitternde Hand nicht ausgelöst wird, aber andererseits ein präzises, schnelles Auslösen ermöglicht, denn die Schüsse müssen in sehr kurzer Zeit abgegeben werden, da die Zeit, die zum Schießen benötigt wird, zur Laufzeit hinzugerechnet wird, und die kürzeste Zeit den Sieg davonträgt.

Der Druckpunktabzug legt beim Abziehen über einen bestimmten Abzugsweg einen Vorlauf unter Überwinden einer bestimmten, einstellbaren Kraft zurück, die mit dem Weg zunimmt. Innerhalb dieses Vorlaufes kehrt der Abzug, wenn er losgelassen wird, stets wieder in seine unbetätigte Ausgangslage zurück, ohne daß der Schuß fällt. Nach Zurücklegen des Vorlaufs steigt, wenn man weiter abzieht, die Abzugskraft möglichst abrupt über einem möglichst geringen Abzugsweg an, wonach der Schuß bricht. Beim Schießen zieht man, wenn man schießen will, über den Vorlauf hinweg gleichmäßig ab, bis man an einen abrupt ansteigenden Bereich kommt, den sogenannten "Druckpunkt". Dort kann man gegebenenfalls warten, bis sich eine gute Gelegenheit für den Schuß ergibt, und dann die Spannung im Schußfinger, in der Regel dem rechten oder linken Zeigefinger, erhöhen, bis der Schuß bricht.

Maßgeblich sind hierbei zwei Faktoren: Der Abzug soll, wenn der Schuß noch nicht ausgelöst und die Spannung im Abzugsfinger verringert wird, wieder in seine Lage vor dem Druckpunkt oder sogar in seine Ausgangslage zurückkehren; insbesondere soll der Abzug nach Überwinden des Druckpunktes auch keinen weiteren, unbelasteten Weg zurücklegen und sich möglichst nicht weiterbewegen.

Beim mechanischen Abzug spricht man vom "Triggerstop", der meist, der Toleranzen wegen, einstellbar ist und bei dem es durchaus vorkommen kann, daß er bei Fehleinstellung den Abzug so blockiert, daß man überhaupt nicht mehr schießen kann. Der Zweck des Triggerstops ist es, ein Durchfallen des Fingers und damit eine ungewollte Bewegung in der Hand zu vermeiden. Dies ist auch dann wichtig, wenn durch elektrische Auslösung der Schuß längst gefallen ist, bevor der durchfallende Finger eine Bewegung der Waffe auslösen kann, denn der geübte Schütze beurteilt den Treffpunkt seines Schusses auch aus dem Gefühl im Abzugsfinger beim Abziehen.

Der Erfindung liegt nun die Aufgabe zugrunde, einen einfachen, zuverlässigen elektrischen Abzug mit "Triggerstop" zu finden, bei dem möglichst der Vorlauf und/oder der Druckpunkt einstellbar ist bei dem der Abzug unmittelbar, aber zuverlässig nach Auslösen des Schusses abstoppt und dabei die Waffe möglichst wenig beeinflußt wird. Dabei sollen bevorzugt Toleranzen, die bei der Serienfertigung unvermeidlich sind, möglichst wenig Einfluß auf den Druckpunkt und den Triggerstop haben, auch wenn diese nicht voreinstellbar sein sollten.

Salopp ausgedrückt, soll die Erfindung einen möglichst trockenen, äußerst zuverlässigen und sicheren Druckpunktabzug finden, der keinen erhöhten Fertigungsaufwand verlangt.

Diese Aufgabe wird durch die Merkmale des Anspruchs 1 gelöst. Bei der eingangs genannten, elektrischen Anzugseinrichtung wird das Schaltelement durch ein Federelement betätigt, das einen begrenzt nachgiebigen Endanschlag des Kontaktarmes beim Erreichen des Druckpunktes bildet. Das Federelement setzt dem Abzug im Druckpunkt eine Kraft entgegen, die - je nach Aufbau der Blattfeder - progressiv ansteigen kann, so daß der Abzug bei Auslösen des Druckpunkts weder durchfällt noch durch einen Anschlag gestoppt wird, sondern von einer zunehmendenn Widerstandskraft abgebremst wird. Das elektrische Schaltelement kann durch die Bewegung des Federelements bzw. durch die Zunahme der Spannung in Federelement kontrolliert werden.

Gemäß Anspruch 2 ist der Abzug drehbar um eine Querachse ausgebildet und weist einen Abzugszüngel und einen Stellarm auf, Dadurch wird eine sichere und einfache Abzugsfunktion realisiert.

In einer bevorzugten Ausgestaltung der Erfindung befinden sich alle Teile des Abzugs, in Bezug auf die Querachse, in einem oder nahezu einem ausgewuchteten Zustand (Anspruch 3).

Durch Auswuchten des Abzugs, also zum Beispiel durch ein Gegengewicht zum Abzugszüngel auf der gegenüberliegenden Seite der Querwelle, wird ein in sich ausgewogener Abzug erreicht, der gegenüber Beschleunigungskräften wie etwa Stößen oder Erschütterungen völlig inert ist. Durch diese Maßnahme wird der Abzug von anderen Einrichtungen völlig entkoppelt, so daß er, auch wenn die Abzugsfeder recht schwach ist, nie durch Beschleunigungskräfte bewegt werden kann. Beim Erreichen des Druckpunktes, wenn der Abzug gegen das Federelement anschlägt, wird dieses durch den Abzug ausgelenkt und betätigt seinerseits den Abzugskontakt. Da die Masse des Federelements, verglichen mit der Kraft, die zu seiner Auslenkung erforderlich ist, sehr klein ist, sind die erforderlichen Beschleunigungskräfte zu seiner Auslenkung hoch; und zwar höher, als sie beim Herunterfallen einer Waffe aus beträchtlicher Höhe auftreten.

Der Kontakt selbst ist vom Abzug völlig entkoppelt und kann daher nahezu ohne bewegliche Leitungen oder dergleichen ausgeführt werden, so daß er die gesamte Lebenszeit der Waffe überdauert und somit, was die Verläßlichkeit angeht, nicht zu Problemen führen kann.

Beim Auswuchten des Abzugs muß berücksichtigt werden, daß die mit einer Masse behaftete Abzugsfeder auf den Abzug einwirkt und versucht, ihn in die Ruhelage zu bewegen. Diese Abzugsfeder muß demnach beim Auswuchten des Abzugs mit beachtet werden. Im ungünstigen Fall beeinflussen nämlich die Beschleunigungskräfte die Federkraft, die auf den Abzug einwirkt. Dabei muß man berücksichtigen, daß unter Umständen auch noch andere Massenkräfte auf die Abzugsfeder einwirken.

Um diesem Problem entgegenzuwirken, ist nach einer Ausgestaltung der Erfindung die Abzugsfeder von einem Torsionsstab gebildet, der die Querachse bildet oder längs deren verläuft (Anspruch 4). Dabei kann die Querachse etwa ein Rohr bilden, das beiderseits drehbar gelagert ist und inmitten dessen sich der Torsionsstab erstreckt. Der Torsionsstab ist, ob er nun gespannt ist oder nicht, bezüglich der Querachse stets ausgewuchtet und behindert somit das Auswuchten des Abzugs in keiner Weise. So kann der Abzug völlig ausgewuchtet werden und gegebenenfalls mit Stellschrauben oder Bohrungen zum genaueren Auswuchten versehen sein, wie etwa die Unruhe eines Uhrwerks, so daß umgekehrt trotz des Druckpunktabzugs äußerst geringe Abzugsgewichte möglich sind, da der Abzugs bei einen Schlag, Stoß, beim Herunterfallen oder dergleichen seine Lage nie ändert, sondern höchstens, wenn er freigegeben wird, aufgrund der Abzugsfeder in seine Ausgangslage zurückkehrt, wenn er vorher schon ausgelenkt wurde.

Eine weitere Ausgestaltung der Erfindung besteht darin, daß mindestens ein freies Ende des Torsionsstabes in einem Gehäuse der Abzugseinrichtung gelagert ist, und daß dieses freie Ende durch Verdrehen einstellbar ist (Anspruch 5). Hiernach ist die Vorspannung des Torsionsstabes, der in der tatsächlichen Ausführung von einem Metallstab gebildet wird, nach den Wünschen des Schützen einstellbar. Die Lagerung des Abzugs erfolgt dabei, wie schon vorher gesagt, durch ein Rohr, in dessen Mitte sich der Metallstab erstreckt.

Eine andere, für Faustfeuerwaffen besonders geeignete Weiterbildung besteht darin, daß die Abzugsfeder auf eine Stange einwirkt, die mit dem Abzug gelenkig verbunden ist und beim Erreichen des Druckpunktes ihrerseits auf das Schaltelement einwirkt (Anspruch 6). Wegen des gedrängten Aufbaus im Bereich vor und über dem Abzugs einer Faustfeuerwaffe ist hier das elektrische Schaltelement nach hinten verlegt, wo es sich in unmittelbarer Nähe der übrigen, elektronischen Einrichtungen und der Stromquelle befindet. Bei dem elektrischen Schaltelement befindet sich die Blattfeder, auf die der Abzug nicht unmittelbar, sondern über eine Stange einwirkt.

Es wäre nun möglich, die Stange und den Abzug separat abzufedern und zwischen ihnen nur einen Anschlag vorzusehen, um die Massenkräfte von Abzug und Stange beim Einwirken äußerer Kräfte zu entkoppeln, oder die Stange am Abzugszüngel anzulenken, so daß die Massenkräfte der Stange den Abzug gegen die Abzugskraft belasten. Hier wird aber eine konträre Lösung gewählt, die für Gebrauchspistolen besonders geeignet ist und darin besteht, daß die Stange am Stellarm des Abzugs angelenkt ist und von der Abzugsfeder nach hinten gedrückt wird. Da Abzug und Stange am Stellarm aneinander angelenkt sind, sind sie auch beim Einwirken äußerer Kräfte so miteinander gekoppelt, daß die Massenkraft der Stange den Abzug abziehen könnte. Die Abzugsfeder wirkt aber einer solchen auslösenden Kraft entgegen. Bei Einwirken einer Massenkraft wird die Waffe in der Regel nicht in der Hand gehalten. Das Gewicht und demnach die Masse der Stange kann recht gering gehalten werden, und letztlich liegt der Druckpunkt bei einer Gebrauchspistole meist bei 20 N oder mehr. Daher kann diese besonders einfache Lösung gewählt werden, ohne daß man mit einer Sichereheitseinbuße rechnen müßte.

Eine besonders einfache Ausführung besteht darin, daß an der Stange ein Vorsprung ausgebildet ist, der bei Erreichen des Druckpunktes gegen das Federelement drückt (Anspruch 7). Dieser Vorsprung kann bevorzugt wie der Bart eines Schlüssels nach unten stehen, so daß dann, wenn der Abzug abgezogen wird, sich der "Bart" nach vorne gegen das Federelement bewegt, die gesamte Stange aber nur den Raumbedarf eines Blechstreifens hat.

Es kann sogar an der Stange vor dem ersten ein zweiter, zur ersten etwa paralleler Vorsprung ausgebildet sein, der in Ruhelage des Abzugs gegen die andere Seite des Federelements anschlägt (Anspruch 8). Dieser zweite Anschlag kann im elektrischen Schaltelement oder einem eigenen Schaltelement genutzt werden, um etwa die Funktion eines Unterbrechers herzustellen. Die beiden Schaltelemente oder die beiden Zustände eines Schaltelements wirken somit etwa auf eine Flip-Flop-Schaltung ein, so daß erst dann ein zweites Mal wirksam abgezogen werden kann, wenn der Abzug das andere, nicht den Schuß auslösende Schaltelement betätigt hat. Dabei gibt der Abstand der beiden Vorsprünge bzw. "Bärte" den Vorlauf des Abzuges vor. Die Toleranzen, die solche benachbarten Ausbildungen ein und desselben Stanz- oder Prägeteils haben, sind selbst bei sorgloser Serienfertigung außerordentlich gering.

Das elektrische Schaltelement, das vom Federelement betätigt wird, ist vorzugsweise ein durch die Auslenkung des Federelements betätigtes Schaltelement (Anspruch 9), etwa ein Reed-Schalter, obwohl einem kontaktlosen Schaltelement der Vorzug gegeben werden dürfte, das etwa durch das freie Ende des Federelements betätigt wird.

Erfindungsmäßig weist das Schaltelement einen Dehnungsmeßstreifen auf, der auf dem Federelement sitzt und dessen Dehnung in einer oder in beiden Richtungen mißt. Solche Dehnungsmeßstreifen können besonders klein und leicht ausgeführt werden. Die dem oder den Dehnungsmeßstreifen zugeordnete Schaltung stellt einen Schwellenwert der Spannung oder des Stromes fest, die sich der Verformung der Blattfeder (und des bzw. der Dehnungsmeßstreifen) entsprechend verändern, und löst bei Überschreiten dieses Schwellenwertes den Schuß aus. Im Falle der vorher beschriebenen Gebrauchspistole löst das (Schwache) Verbiegen des Federelements in der einen Richtung das Unterbrechungssignal, in der anderen Richtung den Schuß aus.

Dabei kann dem Dehnungsmeßstreifen ein elektrisches Einstellelement, etwa ein Potentiometer, zum Einstellen des Druckpunktgewichtes zugeordnet sein (Anspruch 10). So wird der Druckpunkt nicht durch die Gestaltung des Federelements Blattfeder festgelegt, sondern ist zusätzlich durch den Schwellenwert der den Schuß auslösenden Spannung einstellbar. Der aufwendige und störanfällige mechanische Aufbau wird dadurch noch weiter vereinfacht.

Anspruch 11 betrifft eine Waffe mit einer erfindungsgemäßen Abzugseinrichtung.

Insgesamt schafft die Erfindung eine Abzugseinrichtung, mit, was das Abzugsgewicht (die zur Betätigung des Abzugs aufzuwendende Kraft) angeht, einem nahezu frei wählbaren Verlauf und einem ebenfalls einstellbaren Druckpunkt. Der ist von gerade noch fühlbar bis hart einstellbar, ohne daß dazu unterschiedliche Abzugswege vonnöten wären. Es muß nur ein vorgespanntes Federelement, ein hartes Federelement oder ein Federelement mit progressiver Federkonstante gewählt werden. Geringe Auslenkungen genügen dann bereits, um einen steilen Kraftanstieg zu erreichen.

So ergibt sich ein außerordentlich "trockener" Abzug, bei dem nach einem Vorlauf über eine beliebige Strecke ein Druckpunkt folgt, der praktisch ohne weiteren - für den Schützen - spürbaren Abzugsweg bis zum Brechen des Schusses verläuft. Nach dem Schuß fällt der Abzug weder frei durch noch wird er durch einen Anschlag gestoppt, sondern der Abzugswiderstand nimmt weiter zu, ohne daß ein Abzugsweg spürbar ist.

Nicht einschränkende Ausführungsbeispiele sind aus der Zeichnung ersichtlich, in der nur der Mechanismus der erfindungsgemäßen Abzugseinrichtung ohne ein ihn aufnehmendes Gehäuse dargestellt ist. Dabei zeigt:
- Fig. 1 einen Abzug mit Torsionsfeder,
- Fig. 2 einen Pistolenabzug, in Ruhelage, und
- Fig. 3 den Pistolenabzug, bei Auslösung des Schusses.

Gleiche Teile haben in allen Figuren dasselbe Bezugszeichen.

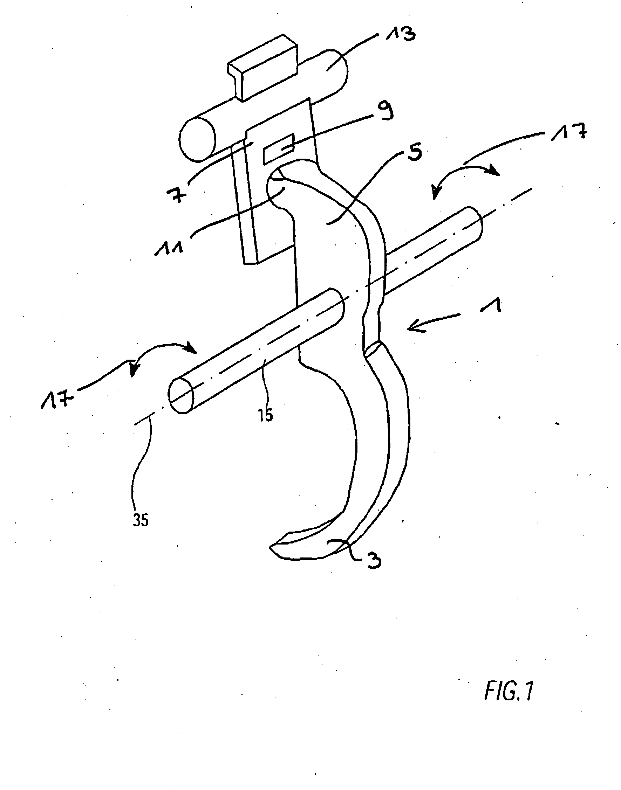

Bei dem in Fig. 1 gezeigten Ausführungsbeispiel weist der Abzug 1 einen Abzugszüngel 3 auf, der nach oben durch einen Stellarm 5 verlängert ist, der an seiner obersten, vorderen Ecke eine Nase 11 aufweist. Der Abzug 1 ist insgesamt ein ebenes Gebilde mit einem Schwerpunkt, durch den eine zur Ebene 35 des Abzugs 1 senkrechte Achse verläuft, die hier durch eine Torsionsfeder 15 dargestellt ist. So ein Abzug 1 ist z.B. für ein Scharfschützengewehr geeignet.

Bezüglich dieser Achse 35 ist der Abzug 1 ausgewuchtet, das heißt, wenn er drehbar um die Achse 35 aufgehängt ist, dann befindet er sich in jeder Drehlage im Gleichgewicht. Eine äußere Beschleunigungskraft kann daher die Lage des Abzugs 1 nicht beeinflussen.

Um die geometrische Achse 35 herum erstreckt sich eine rohrförmige als Abzugswelle dienende Aufnahme (nicht gezeigt), die am Abzug befestigt und etwa im Abzugsgehäuse drehgelagert ist. Innerhalb dieser rohrförmigen Aufnahme verläuft die Torsionsfeder 15, auf der der Abzug sitzt, die an den äußeren Enden eingespannt ist und die an der oder den äußeren Einspannung (en) in Richtung des Pfeiles 17 ein- oder beidseitig verstellbar ist. In einer anderen Ausführung kann die Torsionsfeder 15 selbst als Abzugswelle dienen.

In einer Ruhelage, in der der Abzug 1 nicht betätigt ist, liegt die Rückseite des Stellarms 5 (in der Zeichnung die rechte Seite) an einem Anschlag (nicht gezeigt) an. Wenn der Finger in den Abzugszüngel 3 gelegt wird und auf diesen eine Kraft ausübt, dann bewegt sich der Abzug 1 vom Anschlag weg gegen die etwa linear zunehmende Kraft der Torsionsfeder 15, die die Abzugsfeder bildet, bis die Nase 11 am Stellarm 5 gegen ein hier als Blattfeder 7 ausgebildetes Federelement stößt.

Das Federelement kann aber auch ein Biegeelement mit beliebig gestaltetem Querschnitt sein. Als Federelement kann auch ein Torsionsstück dienen, an dem ein als Hebelarm wirkendes Betätigungselement vorgesehen ist, auf das der Stellarm 5 wirkt.

Die Blattfeder 7 erstreckt sich hier etwa vertikal vor der Nase 11 und ist mit einem Ende in eine Federeinspannung 13 eingespannt. Das andere Ende ist frei gegen die Federkraft der Blattfeder 7 beweglich. Die Masse der Blattfeder 7 ist gemessen an ihrem Federwiderstand gering. Die Federeinspannung 13 ist gegebenenfalls durch Verdrehen einstellbar, um die Lage des Druckpunktes und damit den Abzugsweg an den Schützen anzupassen.

Auf der Vorderseite der Blattfeder 7 befindet sich ein Dehnungsmeßstreifen 9, der mit einer hier nicht gezeigten Meß- bzw. Zündschaltung durch Drähte oder sonstige elektrische Leiter (nicht gezeigt) verbunden ist. Zur Signalverbesserung sind in anderen Ausführungen (nicht gezeigt) mehrere Dehnungsmeßstreifen ggf. auch auf beiden Seiten der Blattfeder 7 angeordnet. Die Meßschaltung ist mit einer Temperaturkompensation versehen, um temperaturbedingte Signaländerung auszugleichen.

Wird der Abzug 1 betätigt, dann legt er zunächst einen Vorlauf zurück, der durch die Torsionsfeder 15 belastet wird, bis er mit der Nase 11 gegen die Blattfeder 7 anschlägt. Hier erhöht sich die Abzugskraft (die zum Betätigen des Abzugs 1 erforderliche Kraft) diskontinuierlich, wobei die Blattfeder 7 ein wenig verbogen wird. Diese Verbiegung ändert den Widerstand im Dehnungsmeßstreifen 9, bis ein Schwellenwert erreicht wird, bei dem das Zündsignal ausgelöst wird. Der Schwellenwert ist etwa durch ein Potentiometer einstellbar, und zwar von einem kaum fühlbaren Druckpunkt im Abzug 1 bis zu einem erheblichen Druckpunkt, der einige N erreichen kann. Dabei ist die aufgewandte Abzugskraft abhängig von der Einstellung der Torsionsfeder 15, deren Widerstand, weil der Abzug ausgewuchtet ist, sehr gering sein kann. Für ein Scharfschützengewehr beträgt die am Abzugszüngel 3 aufzubringende Kraft an Ende des Vorlaufes zum Beispiel 7,5 N, die auslösende Kraft beträgt etwa 13 N, und die Kraft erhöht sich nach dem Auslösen weiter, so daß kein Durchfallen des Abzugs spürbar ist. Die Einstellung kann nach Wunsch geändert werden, so daß sich der jeweilige Scharfschütze, Sportschütze oder Jäger die Waffe nach seiner eigenen Gewohnheit anpassen kann.

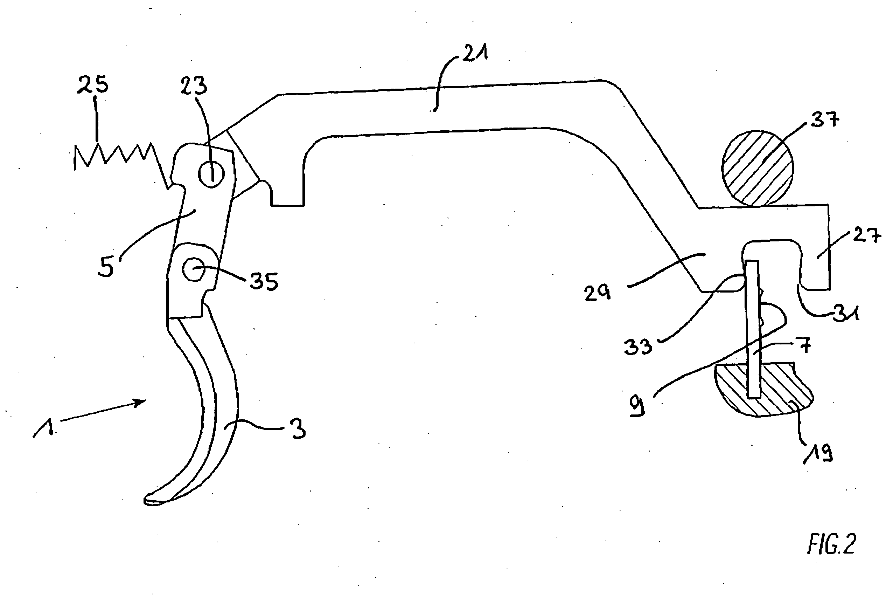

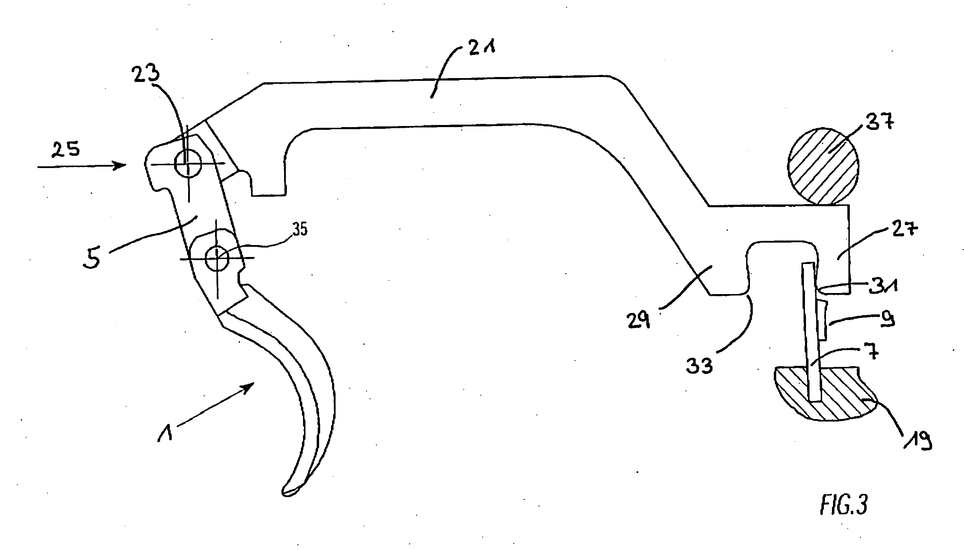

In Fig. 2 und 3 ist eine Abzugseinrichtung gezeigt, die z.B. für eine Selbstladepistole geeignet ist. Wie die vorherige Abzugseinrichtung weist auch diese einen Abzug 1 auf, der aus Abzugszüngel 3 und Stellarm 5 besteht. Der Abzug 1 ist um die Achse 35 schwenkbar, die beiderseits im Griffstück der Pistole (nicht gezeigt) befestigt ist. Auf den vorderen Endabschnitt des Stellarms 5, der ähnlich der Nase 11 des ersten Ausführungsbeispiels der Fig. 1 angeordnet ist, wirkt eine Abzugsfeder 25, die sich an der Waffe (nicht gezeigt) abstützt. In Fig. 3 ist die Abzugsfeder 25 nur als Kraftpfeil dargestellt.

Am Kontaktarm 5 ist das vordere Ende einer Stange 21 beispielsweise mittels eines Drehbolzens 23 angelenkt. Die Stange 21 erstreckt sich nach hinten.

Am hinteren Ende weist die Stange 21 einen hinteren Haken 27 und einen vorderen Haken 29 auf, die sich beide nach unten erstrecken und zueinander - in horizontaler Richtung - mit geringer Toleranz beabstandet sind. Über diesem Abstand befindet sich ein Querstück 37, das verhindert, daß die Stange 21 nach oben freikommen kann. Der vordere Haken 29 hat an seiner Hinterseite eine Berührungsstelle 33 und der hintere Haken 27 an seiner Vorderseite eine Berührungsstelle 31. Wenn der Abzug 1 losgelassen oder voll abgezogen wird, dann tritt eine der beiden Berührungsstellen 33, 31 in Berührung mit der Blattfeder 7 und übt eine Kraft auf sie aus.

Von unten her ragt diese Blattfeder 7, auf der ein (oder mehrere) Dehnungsmeßstreifen 9 sitzen, in die Lücke zwischen den Haken 29, 27 (bzw. zwischen den beiden Berührungsstellen 33, 31) hinein. Die Blattfeder 7 ist in einem Teil 19 der Waffe befestigt.

In Fig. 2 ist die Abzugseinrichtung in Ruhelage gezeigt, dagegen in Fig. 3 beim vollen Abziehen. Durch Druck auf den Abzugszüngel 3 hat sich der Stellarm 5 nach vorne bewegt, und zwar gegen die Kraft der Abzugsfeder 25. Dadurch wurde die Stange 21 nach vorne bewegt, wobei der vordere Haken 29 (Berührungspunkt 33) außer Eingriff und der hintere Haken 27 (Berührungspunkt 31) in Eingriff mit der Blattfeder 7 getreten ist.

Beim Druck des Hakens 27 gegen die Blattfeder 7 im Berührungspunkt 31 wird die Blattfeder 7 belastet und federnd nach vorne verbogen, bis der Dehnungsmeßstreifen einen für den Druckpunkt repräsentativen Zustand erreicht hat und die Elektronik derart beeinflußt, daß ein Schuß abgegeben wird.

Wird der Abzug losgelassen, nimmt die Abzugseinrichtung wieder den Zustand der Fig. 2 ein, der vordere Haken 29 (Berührungspunkt 33) liegt dann von vorne her an der Feder 7 an, und der Dehnungsmeßstreifen 9 kann die Elektronik der Waffe veranlassen, wieder bereit für den nächsten Schuß zu sein.

Die gesamte Abzugseinrichtung ist für Einzellader, Repetierer, Selbstlader und sogar Dauerfeuerwaffen verwendbar; die Unterbrechung bei Selbstladern erfolgt elektrisch, wobei die Schußbereitschaft wieder hergestellt wird, wenn der Stromfluß im Dehungsmeßstreifen 9 von einem Wert über dem Schwellenwert, der beim Schuß erreicht wurde, auf den Wert unter dem Schwellenwert abgesunken ist, oder wenn ein oberer und ein unterer Schwellenwert überschritten worden ist.

Bei den oben beschriebenen Abzugseinrichtungen kann der Abzug 1 auch bei einer Schußfolge praktisch unbewegt in seiner Druckpunktlage verbleiben, nur der Abzugsfinger erhöht und senkt die Abzugskraft, so daß in erster Linie die Kraft, die auf den Abzug einwirkt, und nicht dessen Lage wesentlich für den Unterbrechungsvorgang ist. So ist zum Beispiel im olympischen Schnellfeuer eine geringe, aber vielleicht entscheidende Zeitersparnis gegenüber mechanischen Abzügen erreichbar, bei denen sich der Abzug nach jedem Schuß immer um eine gewisse, durchaus nennenswerte Strecke zurückbewegen muß, bevor er erneut betätigt werden kann.

Die Abzugseinrichtung ist für eine mechanische und eine elektrische Munitionszündung geeignet. Bei mechanischer Zündung wirkt die Schaltung auf ein Stellelement, das ein Schlagstück freigibt, ggf. auch zusätzlich auf die Freigabe eines Sicherungselements, etwa eine Schlagbolzensicherung. Bei der elektrischen Munitionszündung wird die Munition direkt - ohne Schlagmechanik - über einen Stromimpuls gezündet.

## Patentansprüche

1. Elektrische Abzugseinrichtung für eine Handfeuerwaffe, mit
- einem gegen einen Druckpunkt verstellbaren Abzug (1),
- einer vorzugsweise einstellbaren, auf den Abzug einwirkenden Abzugsfeder, und
- einem durch ein Federelement (7), insbesondere eine Blattfeder, nach Zurücklegen eines Vorlaufs betätigten elektrischen Schaltelement,
wobei das Federelement (7) den Endanschlag für den Abzug (1) bildet, und
das Schaltelement einen Dehnungsmeßstreifen (9) aufweist, der auf dem Federelement (7) sitzt und dessen Verformung detektiert.

2. Abzugseinrichtung nach Anspruch 1, **dadurch gekennzeichnet, daß** der Abzug (1) einen Abzugszüngel (3) und einen Stellarm (5) aufweist und um eine Querachse (35) drehbar ausgebildet ist.

3. Abzugseinrichtung nach Anspruch 2, **dadurch gekennzeichnet, daß** sich alle Teile des Abzugs (1), in Bezug auf die Querachse (15, 35), in einem weitgehend ausgewuchteten Zustand befinden.

4. Abzugseinrichtung nach Anspruch 2, oder 3, **dadurch gekennzeichnet, daß** die Abzugsfeder von einem Torsionsstab (15) gebildet wird, der koaxial zur Querachse (35) verläuft.

5. Abzugseinrichtung nach Anspruch 3, **dadurch gekennzeichnet, daß** mindestens ein freies Ende des Torsionsstabes (15) in einem Gehäuse der Abzugseinrichtung gelagert ist, und daß dieses freie Ende durch Verdrehen einstellbar ist.

6. Abzugseinrichtung nach einem der Ansprüche 2 bis 5, **dadurch gekennzeichnet, daß** eine Stange (21) vorgesehen ist, die mit dem Stellarm (5) gelenkig verbunden ist und beim Erreichen des Druckpunktes ihrerseits auf das Schaltelement (9) einwirkt.

7. Abzugseinrichtung nach Anspruch 6, **dadurch gekennzeichnet, daß** an der Stange (21) ein Vorsprung (27) ausgebildet ist, der bei Erreichen des Druckpunktes gegen eine Seite des Federelements (7) drückt.

8. Abzugseinrichtung nach Anspruch 7, **dadurch gekennzeichnet, daß** an der Stange (21) vor dem ersten ein zweiter, zum ersten etwa paralleler Vorsprung (29) ausgebildet ist, der in Ruhelage des Abzugs (1) gegen die andere Seite des Federelements (7) drückt.

9. Abzugseinrichtung nach einem der Ansprüche 1 bis 8, **dadurch gekennzeichnet, daß** das elektrische Schaltelement ein durch die Auslenkung des Federelements (7) betätigtes Schaltelement (9) ist.

10. Abzugseinrichtung nach Anspruch 1, **dadurch gekennzeichnet, daß** dem Dehnungsmeßstreifen (9) ein elektrisches Einstellelement, insgesondere ein Potentiometer, zum Einstellen des Druckpunktwiderstands zugeordnet ist.

11. Waffe mit einer Abzugseinrichtung nach einem der Ansprüche 1 bis 10.

## Claims

1. An electrical trigger device for a handgun, with
- a trigger (1) displaceable towards a pressure point,
- a preferably adjustable trigger spring acting upon the trigger, and
- an electrical switching element actuated by a spring element (7), in particular a leaf spring, after covering a forward run,
wherein the spring element (7) forms the end stop for the trigger (1), and the switching element has a resistance strain gauge (9) which is mounted on the spring element (7) and detects the deformation thereof.

2. A trigger device according to claim 1, **characterized in that** the trigger (1) has a trigger blade (3) and a setting arm (5) and is designed so as to be rotatable about a transverse axis (35).

3. A trigger device according to claim 2, **characterized in that** all parts of the trigger (1) are in a largely balanced state with respect to the transverse axis (35).

4. A trigger device according to claim 2 or 3, **characterized in that** the trigger spring is formed by a torsion rod (15) which extends coaxially to the transverse axis (35).

5. A trigger device according to claim 3, **characterized in that** at least one free end of the torsion rod (15) is mounted in a housing of the trigger device, and this free end is capable of being adjusted by rotation.

6. A trigger device according to any one of claims 2 to 5, **characterized in that** a rod (21) is provided which is connected to the setting arm (5) in an articulated manner and when the pressure point is reached it acts in turn upon the switching element (9).

7. A trigger device according to claim 6, **characterized in that** a projection (27), which presses against one side of the spring element (7) when the pressure point is reached, is formed on the rod (21).

8. A trigger device according to claim 7, **characterized in that** a second projection (29), which is approximately parallel to the first one and which presses against the other side of the spring element (7) in the rest position of the trigger (1), is formed on the rod (21) in front of the first one.

9. A trigger device according to any one of claims 1 to 8, **characterized in that** the electrical switching element is a switching element (9) actuated by the deflection of the spring element (7).

10. A trigger device according to claim 1, **characterized in that** an electrical adjustment element, in particular a potentiometer, for adjusting the pressure point resistance is associated with the resistance strain gauge (9).

11. A weapon with a trigger device according to any one of claims 1 to 10.

## Revendications

1. Dispositif électrique de détente pour une arme à feu de poing, comportant
- une détente (1) pouvant être déplacée contre un point de poussée,
- un ressort de détente de préférence ajustable, agissant sur la détente,
- un élément de commutation électrique actionné par un élément à ressort (7), en particulier par un ressort à lames, après retour d'un déplacement,
l'élément à ressort (7) formant la butée de fin de course pour la détente (1), et
l'élément de commutation présentant une jauge de contrainte (9) qui se trouve sur l'élément à ressort (7) et détecte la déformation de ce dernier.

2. Dispositif de détente selon la revendication 1, **caractérisé en ce que** la détente (1) présente une queue de détente (3) et un bras de réglage (5) et est réalisée de manière à pouvoir tourner autour d'un axe transversal (35).

3. Dispositif de détente selon la revendication 2, **caractérisé en ce que** toutes les pièces de la détente (1), en rapport avec l'axe transversal (15, 35), se trouvent dans un état largement équilibré.

4. Dispositif de détente selon la revendication 2 ou 3, **caractérisé en ce que** le ressort de détente est formé par une barre de torsion (15) qui s'étend de manière coaxiale par rapport à l'axe transversal (35).

5. Dispositif de détente selon la revendication 3, **caractérisé en ce qu'**au moins une extrémité libre de la barre de torsion (15) est logée dans un boîtier du dispositif de détente, et **en ce que** cette extrémité libre est ajustable par torsion.

6. Dispositif de détente selon l'une quelconque des revendications 2 à 5, **caractérisé en ce qu'**une tige (21) est prévue, laquelle est reliée de manière articulée au bras de réglage (5) et agit sur l'élément de commutation (9) lorsqu'elle atteint de son côté le point de poussée.

7. Dispositif de détente selon la revendication 6, **caractérisé en ce qu'**une saillie (27) est réalisée sur la tige (21), laquelle saillie exerce une pression sur le côté de l'élément à ressort (7) lorsque le point de poussée est atteint.

8. Dispositif de détente selon la revendication 7, **caractérisé en ce qu'**une deuxième saillie (29) à peu près parallèle à la première saillie est réalisée devant cette dernière et sur la tige (21), laquelle deuxième saillie exerce une pression sur l'autre côté de l'élément à ressort (7) lorsque la détente (1) se trouve en position de repos.

9. Dispositif de détente selon l'une quelconque des revendications 1 à 8, **caractérisé en ce que** l'élément de commutation électrique est un élément de commutation (9) actionné par la déviation de l'élément à ressort (7).

10. Dispositif de détente selon la revendication 1, **caractérisé en ce qu'**un élément d'ajustage électrique, en particulier un potentiomètre, est associé à la jauge de contrainte (9) pour ajuster la résistance du point de poussée.

11. Arme comportant un dispositif de détente selon l'une quelconque des revendications 1 à 10.
